## Europäisches Patentamt

## European Patent Office

## Office européen des brevets

(11) Veröffentlichungsnummer: **0 129 298 B1**

(12) **EUROPÄISCHE PATENTSCHRIFT**

(45) Veröffentlichungstag der Patentschrift:
08.11.89

(51) Int. Cl.⁴: **G 11 B 5/58** // G11B5/02

(21) Anmeldenummer: **84200867.4**

(22) Anmeldetag: **15.06.84**

(54) **System zum Wiedergeben von auf einem Magnetband gespeicherten Signalen.**

(30) Priorität: **17.06.83 AT 2243/83**

(43) Veröffentlichungstag der Anmeldung:
**27.12.84 Patentblatt 84/52**

(45) Bekanntmachung des Hinweises auf die Patenterteilung:
**08.11.89 Patentblatt 89/45**

(84) Benannte Vertragsstaaten:
**AT DE FR GB IT**

(56) Entgegenhaltungen:
**DE-A- 2 741 030**
**FR-A- 2 362 542**
**FR-A- 2 503 971**
**GB-A- 2 029 607**
**GB-A- 2 089 071**
**US-A- 4 255 768**

(73) Patentinhaber: **N.V. Philips' Gloeilampenfabrieken,
Groenewoudseweg 1, NL-5621 BA Eindhoven (NL)**

(72) Erfinder: **Weissensteiner, Walter, p/A INT.
OCTROOIBUREAU B.V. Prof. Holstlaan 6, NL-5656 AA
Eindhoven (NL)**

(74) Vertreter: **van der Kruk, Willem Leonardus et al,
INTERNATIONAAL OCTROOIBUREAU B.V. Prof.
Holstlaan 6, NL-5656 AA Eindhoven (NL)**

ACTORUM AG

## Beschreibung

Die Erfindung betrifft ein System zum Wiedergeben von auf einem Magnetband in schräg zu dessen Längsrichtung verlaufenden, parallel nebeneinander liegenden Spuren gespeicherten Signalen mit einer trommelförmigen Abtasteinrichtung, um deren Mantelfläche das Magnetband in einem vorgegebenen Winkelbereich in einer schraubenlinienförmigen Bahn herumgeschlungen ist und die zum aufeinanderfolgenden Abtasten der Spuren und Wiedergeben der darin gespeicherten Signale mindestens zwei rotierend antreibbare Magnetköpfe aufweist, von denen in zyklisch aufeinanderfolgenden ersten Abtastintervallen jeweils nur ein Magnetkopf mit dem Magnetband in Abtastverbindung steht und in zyklisch aufeinanderfolgenden, zwischen den ersten Abtastintervallen liegenden zweiten Abtastintervallen jeweils zwei Magnetköpfe zugleich mit dem Magnetband in Abtastverbindung stehen und die von elektromagnetischen Verstelleinrichtungen getragen sind, mit denen die Magnetköpfe zum Nachführen derselben entlang der abzutastenden Spuren quer zu denselben in Abhängigkeit von den Verstelleinrichtungen zugeführten Stellsignalen verstellbar sind, zu deren Erzeugung eine Stellsignalerzeugungsschaltung vorgesehen ist, der über eine von einem Steuersignalgenerator steuerbare erste Schalteinrichtung alternierend die von den Magnetköpfen wiedergegebenen, ein Maß für Spurabweichungen der Magnetköpfe von den Spuren enthaltenden Signale zur Erzeugung von zu den Stellsignalen für die Verstelleinrichtungen korrespondierenden Signalen zuführbar sind und die den Verstelleinrichtungen vorgeschaltete Speicherschaltungen aufweist, denen über eine von dem Steuersignalgenerator konform zur ersten Schalteinrichtung steuerbare zweite Schalteinrichtung alternierend die zu den Stellsignalen korrespondierenden Signale zuführbar sind und die diese Signale zur Erzeugung der Stellsignale gespeichert halten, wobei der Steuersignalgenerator in den ersten Abtastintervallen die erste Schalteinrichtung zum Weiterleiten der von dem jeweils in Abtastverbindung stehenden Magnetkopf wiedergegebenen Signale zur Stellsignalerzeugungsschaltung und die zweite Schalteinrichtung zum Weiterleiten der zu den Stellsignalen für die den jeweils in Abtastverbindung stehenden Magnetkopf tragende Verstelleinrichtung korrespondierenden Signale zu der dieser Verstelleinrichtung vorgeschalteten Speicherschaltung ansteuert. Ein solches System ist beispielsweise aus der DE-OS 3 217 031 bekannt.

Bei dem bekannten System werden in den ersten Abtastintervallen, in denen jeweils nur einer der beiden Magnetköpfe der trommelförmigen Abtasteinrichtung dieses Systems mit dem Magnetband in Abtastverbindung steht, der den jeweils in Abtastverbindung stehenden Magnetkopf tragenden Verstelleinrichtung aus den wiedergegebenen, ein Maß für die Spurabweichungen des betreffenden Magnetkopfes enthaltenden Signalen erzeugte Stellsignale zum genauen Nachführen des jeweils in Abtastverbindung stehenden Magnetkopfes entlang der von demselben abzutastenden Spuren zugeführt, so daß während jeden ersten Abtastintervalles eine genaue Spurnachführung für den betreffenden Magnetkopf gewährleistet ist. In den zweiten Abtastintervallen, in denen beide Magnetköpfe zugleich mit dem Magnetband in Abtastverbindung stehen, werden nur für die Verstelleinrichtung eines Magnetkopfes aus den von diesem wiedergegebenen, ein Maß für die Spurabweichungen dieses Magnetkopfes enthaltenden Signalen Stellsignale erzeugt und dieser Verstelleinrichtung zum genauen Nachführen dieses Magnetkopfes entlang der von demselben abzutastenden Spuren zugeführt, wogegen der Verstelleinrichtung für den anderen Magnetkopf ein während der ersten Abtastintervalle aus den von demselben wiedergegebenen Signalen erzeugtes und anschließend gespeichertes Stellsignal zugeführt wird. Auf diese Weise kann zwar der eine Magnetkopf auch in den zweiten Abtastintervallen genau entlang der von demselben abzutastenden Spuren nachgeführt werden, jedoch ist für den anderen Magnetkopf in den zweiten Abtastintervallen keine genaue Spurnachführung gewährleistet, da das Stellsignal für die Verstelleinrichtung dieses Magnetkopfes während jedes zweiten Abtastintervalles auf dem zuvor im ersten Abtastintervall erzeugten gespeicherten Wert festgehalten wird und daher Änderungen im Spurverlauf der von dem anderen Magnetkopf abzutastenden Spuren während des zweiten Abtastintervalles, die in den wiedergegebenen Signalen ihren Niederschlag finden, unberücksichtigt bleiben. Hierdurch kann es in den zweiten Abtastintervallen zu Spurabweichungen des anderen Magnetkopfes kommen, was sich aber in einer schlechteren Wiedergabe der gespeicherten Signale auswirkt.

Um zwei zugleich mit dem Magnetband in Abtastverbindung stehende Magnetköpfe stets genau entlang der von denselben abzutastenden Spuren nachführen zu können, besteht die Möglichkeit, jeder Verstelleinrichtung dieser beiden Magnetköpfe eine separate Stellsignalerzeugungsschaltung zuzuordnen. Die beiden Stellsignalerzeugungsschaltungen können vollkommen unabhängig von einander stets je aus den von dem von der zugeordneten Verstelleinrichtung getragenen Magnetkopf wiedergegeben, ein Maß für die Spurabweichungen dieses Magnetkopfes enthaltenden Signalen Stellsignale für die zugeordnete Verstelleinrichtung erzeugen. Das Vorsehen von zwei solchen Stellsignalerzeugungsschaltungen stellt aber einen erheblichen Mehraufwand dar und erfordert außerdem zusätzlich ein Anpassen der beiden Stellsignalerzeugungsschaltungen aneinander, um für beide ein für einen einwandfreien Betrieb notwendiges gleiches Betriebsverhalten zu erreichen.

Die Erfindung hat sich zur Aufgabe gestellt, bei einem System eingangs angeführter Gattung auch in den zweiten Abtastintervallen ein genaues Nachführen von hierbei zugleich in Abtastverbindung mit dem Magnetband stehenden zwei Magnetköpfen mit einfachen Mitteln zu gewährleisten. Hierzu ist die Erfindung dadurch gekennzeichnet, daß der Steuersignalgenerator in den zweiten Abtastintervallen die erste und die zweite Schalteinrichtung zum mindestens einmaligen abwechselnden zeitmultiplexen Weiterleiten der von den beiden zugleich in Abtastverbindung stehenden Magnetköpfen wiedergegebenen Signale zur Stellsignalerzeugungsschaltung und der zu den Stellsignalen für die die beiden zugleich in Abtastverbindung stehenden Magnetköpfe tragenden Verstelleinrichtung korrespondierenden Signale zu den diesen Verstelleinrichtungen vorgeschalteten Speicherschaltungen ansteuert. Auf diese Weise ist erreicht, daß praktisch ohne zusätzliche Mittel gegenüber dem bekannten System auch in den zweiten Abtastintervallen für die Verstelleinrichtungen der zwei zugleich in Abtastverbindung stehenden Magnetköpfe aus den von diesen Magnetköpfen zugleich wiedergegebenen, ein Maß für Spurabweichungen der beiden Magnetköpfe enthaltenden Signale in zeitmultiplexer Form Stellsignale erzeugt und den beiden Verstelleinrichtungen die dieser zwei Magnetköpfe zugeführt werden. Hierdurch ist gewährleistet, daß die Magnetköpfe sowohl in den ersten als auch in den zweiten Abtastintervallen stets genau entlang der von den selben abzutastenden Spuren nachgeführt werden, so daß stets eine einwandfreie Wiedergabe der auf dem Magnetband in den Spuren gespeicherten Signale erfolgt.

Für die Ausbildung der Schaltereinrichtungen bietet der bekannte Stand der Technik verschiedene Möglichkeiten. Beispielsweise können die Schalteinrichtungen durch einfache Umschalter gebildet sein. Auch können die Schalteinrichtungen aus separaten Arbeitskontaktschaltern bestehen, von denen bei der ersten Schalteinrichtung die Ausgangskontakte und bei der zweiten Schalteinrichtung die Eingangskontakte miteinander verbunden sind. Im Hinblick auf die Realisierung der zweiten Schalteinrichtung hat sich beim erfindungsgemäßen System als vorteilhaft erwiesen, wenn die von dem Steuersignalgenerator angesteuerte zweite Schalteinrichtung durch Signalabtastschalter von Abtast- und Halteschaltungen, welche die den Verstelleinrichtungen vorgeschalteten Speicherschaltungen enthalten, gebildet ist. Auf diese Weise sind die an sich in Abtast- und Halteschaltungen ohnedies vorgesehenen Signalabtastschalter zugleich zur Bildung der zweiten Schalteinrichtung ausgenützt, wodurch ein einfacher Schaltungsaufbau erhalten wird.

Die Erfindung wird nachfolgend anhand eines in den Zeichnungen dargestellten Ausführungsbeispieles erläutert.

Die Fig. 1 zeigt schematisch ein Magnetband mit einem Spurbild von auf demselben schräg verlaufenden Spuren.

Die Fig. 2 zeigt schematisch eine trommelförmige Abtasteinrichtung zum Wiedergeben von in den Spuren des Magnetbandes gemäß Fig. 1 gespeicherten Signalen, die zum Wiedergeben der Signale zwei rotierend antreibbare, diametral zueinander angeordnete, je auf einer elektromechanischen Verstelleinrichtung angebrachte Magnetköpfe aufweist.

Die Fig. 3 zeigt einige Signal-Zeit-Diagramme, aus denen die zeitlichen Abtastverhältnisse für die Magnetköpfe erkennbar sind.

Die Fig. 4 zeigt schematisch die erfindungswesentlichen Teile des elektrischen Aufbaues eines erfindungsgemäßen Systemes zum Wiedergeben von in den Spuren des Magnetbandes gemäß Fig. 1 gespeicherten Signalen.

Die Fig. 5 zeigt einen Teil des elektrischen Aufbaues gemäß Fig. 4 in detaillierter Form.

Die Fig. 6 zeigt einige Signal-Zeit-Diagramme, anhand derer die Funktion des elektrischen Aufbaues des Systems gemäß Fig. 4 erläutert wird.

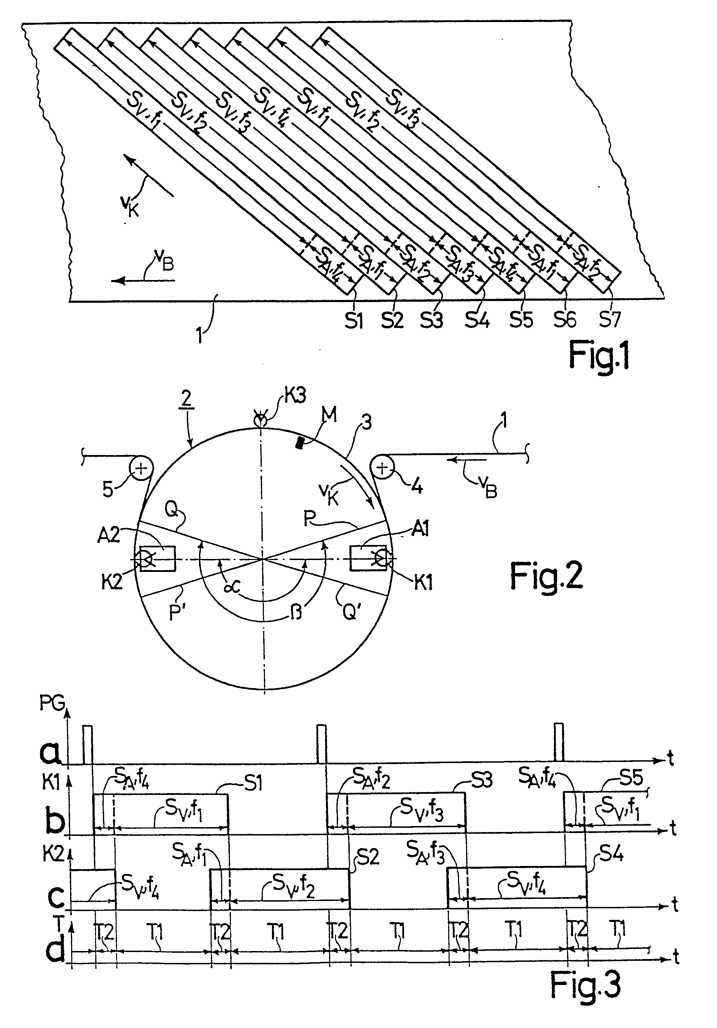

In Fig. 1 ist ein Abschnitt eines Magnetbandes 1 dargestellt, auf dem Signale in schräg zur Längsrichtung desselben verlaufenden, parallel nebeneinander liegenden Spuren S1, S2, S3, S4, S5, S6, S7 usw. gespeichert sind. Beim Aufzeichnen der Signale in diesen Spuren wurde das Magnetband 1 in Richtung des Pfeiles $v_B$ mit konstanter Geschwindigkeit fortbewegt und die Magnetköpfe zum Aufzeichnen der Signale in Richtung des Pfeiles $v_K$ mit konstanter Geschwindigkeit angetrieben. Im vorliegenden Fall sind in einem ersten Spurabschnitt jeder Spur Audiosignale $S_A$ in zeitkomprimierter, pulscodemodulierter Form und in einem an den ersten Spurabschnitt anschließenden zweiten Spurabschnitt jeder Spur Videosignale $S_V$ in frequenzmodulierter bzw. frequenztransponierter Form aufgezeichnet. Gemeinsam mit den Audiosignalen und den Videosignalen sind abwechselnd vier langwellige Spurfolgesignale in den Spuren aufgezeichnet, deren Frequenzen $f_1$, $f_2$, $f_3$ und $f_4$ sich von Spur zu Spur nach einem vorgegebenen Muster ändern. Wie in Fig. 1 schematisch angedeutet ist, ist gemeinsam mit dem Videosignal in zweiten Spurabschnitt jeder Spur und mit dem Audiosignal im ersten Spurabschnitt der jeweils nachfolgenden Spur dasselbe Spurfolgesignal aufgezeichnet.

Zum Wiedergeben der auf dem Magnetband 1 in den Spuren S1, S2 usw. gespeicherten Signale weist ein hierfür vorgesehenes System in allgemein bekannter Weise eine trommelförmige Abtasteinrichtung 2 auf, wie sie schematisch in Fig. 2 angedeutet ist. Eine solche Abtasteinrichtung 2 besteht beispielsweise aus einer stillstehenden Trommelhälfte und einer hierzu koaxialen, rotierend antreibbaren Trommelhälfte, auf der zwei Magnetköpfe K1 und K2 in einem Winkelabstand α von 180°, also diametral zueinander, angeordnet sind. Die beiden Magnetköpfe K1 und K2 treten durch einen zwischen den beiden Trommelhälften vorgesehenen Spalt hindurch mit dem Magnetband 1 in Abtastverbindung und tasten dabei aufeinanderfolgend die Spuren ab, um die darin gespeicherten Signale wiederzugeben. Das Magnetband 1 ist hierfür um die Mantelfläche 3 der durch die beiden Trommelhälften gebildeten Abtasteinrichtung 2 in einer schraubenlinienförmigen Bahn in einem Umschlingungswinkelbereich β, der größer als der Winkelabstand α zwischen den beiden Magnetköpfen K1 und K2 ist, herumgeschlungen, wobei zur Erzielung des Umschlingungswinkelbereiches β das Magnetband 1 im Bereich der Abtasteinrichtung 2 mit Hilfe von zwei Bandführungen 4 und 5 geführt ist. Beim Wiedergeben der in den Spuren gespeicherten Signale wird das Magnetband beispielsweise in Richtung des Pfeiles $v_B$ fortbewegt und die Magnetköpfe K1 und K2 in Richtung des Pfeiles $v_K$ rotierend angetrieben. Um die Relativlage der Magnetköpfe K1 und K2 gegenüber dem Magnetband 1 bzw. den Spuren S1, S2, S3 usw. detektieren zu können, ist ein Positionsgeber vorgesehen, der im wesentlichen aus einem an der rotierend antreibbaren Trommelhälfte angebrachten Magneten M und aus einem gegenüber der Abtasteinrichtung feststehenden Magnetkopf K3 besteht und der aufgrund der Positionierung des Magneten M an der rotierend antreibbaren Trommelhälfte immer dann einen Impuls liefert, wenn der rotierend antreibbare Magnetkopf K1 mit dem Magnetband 1 in Wirkverbindung tritt. Die beiden Magnetköpfe K1 und K2 sind je von einer elektromechanischen Verstelleinrichtung A1 bzw. A2 getragen, die beispielsweise, wie dies ebenfalls allgemein bekannt ist, durch bimorphe, piezoelektrische, streifenförmige Biegeelemente, sogenannte Piezoaktuatoren, gebildet sind. Mit diesen Verstelleinrichtungen ist es möglich, die Magnetköpfe zum Nachfüllen derselben entlang der von ihnen abzutastenden Spuren quer zu denselben in Abhängigkeit von den Verstelleinrichtungen zugeführten Stellsignalen in ihrer Relativlage gegenüber den Spuren zu verstellen.

Im folgenden sind kurz die Abtastverhältnisse für die beiden Magnetköpfe K1 und K2 anhand von Fig. 2 und der Diagramme gemäß Fig. 3 erläutert. In Fig. 3a ist das impulsförmige Ausgangssignal PG des durch den Magneten M und den stillstehenden Magnetkopf K3 gebildeten Positionsgebers dargestellt. Wie erwähnt, gibt der Positionsgeber jeweils dann einen Impuls ab, wenn der Magnetkopf K1 mit dem Magnetband 1 in Wirkverbindung tritt. Hierbei ist der Positionsgeber so ausgebildet, daß beim Auftreten der Rückflanke der Impulse des Positionsgebers der Magnetkopf K1 jeweils mit der Abtastung der von ihm abzutastenden Spur beginnt, wie aus Fig. 3a und 3b hervorgeht. Die Fig. 3b und 3c zeigen die aufeinanderfolgenden Zeitintervalle, in denen die Magnetköpfe K1 bzw. K2 die in den Spuren gespeicherten Signale wiedergeben. Im vorliegenden Fall ist angenommen, daß der Magnetkopf K1 aufeinanderfolgend die Spuren S1, S2, S5 usw. und der Magnetkopf K2 die Spuren S2, S4 usw. abtastet, wobei die beiden Magnetköpfe die in diesen Spuren gespeicherten Audiosignale $S_A$, Videosignale $S_V$ und die Spurfolgesignale mit den Frequenzen f1, f2, f3 und f4 wiedergeben, wie dies in den Fig. 3b und 3c angegeben ist. Wie aus den Fig. 2 sowie 3b und 3c hervorgeht, befindet sich beim Beginn der Abtastung einer Spur durch einen Magnetkopf K1 bzw. K2, wobei derselbe auf dem in Fig. 2 mit P bezeichneten Radius liegt, der andere Magnetkopf K2 bzw. K1 noch beim Abtasten der vorhergehenden Spur, wobei dieser Magnetkopf auf dem in Fig. 2 mit P′ bezeichneten Radius liegt.

Erst nachdem sich die Magnetköpfe um einen Winkelbereich, der der Differenz zwischen dem Umschlingungswinkelbereich β und dem Winkelabstand α gleich ist, in Richtung des Pfeiles $v_K$ weitergedreht haben, kommt der andere Magnetkopf K2 bzw. K1 aus der Abtastverbindung mit dem Magnetband, wobei derselbe auf dem in Fig. 2 mit Q bezeichneten Radius liegt und dementsprechend der diametral gegenüberliegende Magnetkopf auf dem in Fig. 2 mit Q′ bezeichneten Radius liegt. Es sind somit beim vorliegenden System die Abtastverhältnisse so getroffen, daß von den beiden Magnetköpfen K1 und K2 in zyklisch aufeinanderfolgenden ersten Abtastintervallen T1 jeweils nur ein Magnetkopf K1 bzw. K2 mit dem Magnetband 1 in Abtastverbindung steht und in zyklisch aufeinanderfolgenden, zwischen den ersten Abtastintervallen T1 liegenden zweiten Abtastintervallen T2 jeweils die beiden Magnetköpfe K1 und K2 zugleich mit dem Magnetband in Abtastverbindung stehen. Die zyklische Aufeinanderfolge der ersten und zweiten Abtastintervalle ist in Fig. 3d angegeben.

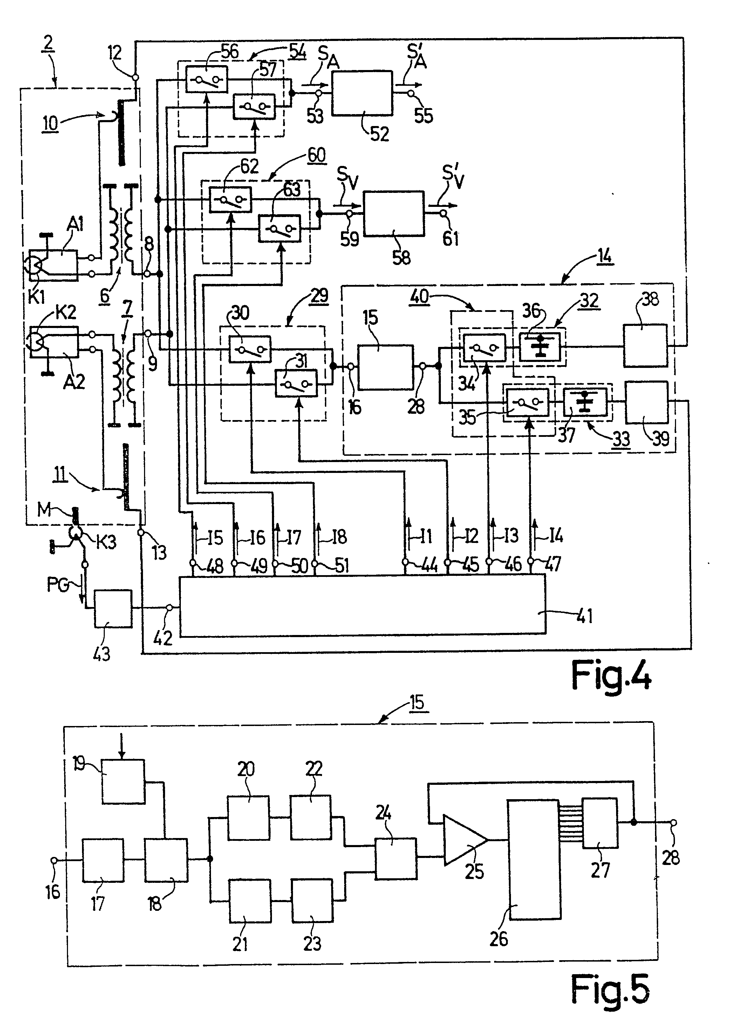

Für die weitere Beschreibung ist nunmehr auf die Fig. 4 und 5 Bezug genommen. In Fig. 4 ist die Abtasteinrichtung 2 schematisch durch ein mit strichlierten Linien dargestelltes Rechteck angedeutet. Zur Signalübertragung der von den rotierend antreibbaren Magnetköpfen K1 und K2 wiedergegebenen Signale von der rotierend antreibbaren Trommelhälfte zur stillstehenden Trommelhälfte der Abtasteinrichtung ist an jeden Magnetkopf K1 bzw. K2 eine Wicklung eines rotierenden Transformators 6 bzw. 7 angeschlossen, an dessen Ausgangsanschlüssen 8 bzw. 9 die wiedergegebenen Signale zur weiteren Verarbeitung zur Verfügung stehen. Wie erwähnt, ist jeder Magnetkopf K1 bzw. K2 von einer elektromechanischen Verstelleinrichtung A1 bzw. A2 getragen, denen die zu ihrer Auslenkung erforderlichen Stellsignale je über eine zwischen stillstehender Trommelhälfte und rotierend antreibbarer Trommelhälfte der Abtasteinrichtung vorgesehene Schleifringanordnung 10 bzw. 11 zuführbar sind. Den Schleifringanordnungen sind die Stellsignale je über einen Eingangsanschluß 12 bzw. 13 derselben zuführbar. Zur Erzeugung der Stellsignale für die Verstelleinrichtung A1 und A2, um die Magnetköpfe K1 und K2 genau entlang der von denselben abzutastenden Spuren nachzuführen, weist das in Fig. 4 schematisch dargestellte System zum Wiedergeben der in den Spuren gespeicherten Signale eine Stellsignalerzeugungsschaltung 14 auf, die einen Schaltungsteil 15 enthält, der aus den von den Magnetköpfen K1 und K2 wiedergegebenen, ein Maß für Spurabweichungen der Magnetköpfe von den Spuren enthaltenden Signalen, die an den Ausgangsanschlüssen 8 und 9 der rotierenden Transformatoren 6 und 7 zur Verfügung stehen, zu den Stellsignalen für die Verstelleinrichtungen A1 und A2 korrespondierende Signale erzeugt.

Im folgenden ist der Schaltungsteil 15, der in Fig. 5 detaillierter dargestellt ist, kurz näher erläutert. Es sei aber darauf hingewiesen, daß der Schaltungsaufbau dieses Schaltungsteiles an sich bekannt und auch für die Erfindung nicht wesentlich ist, so daß sich die nachfolgende Beschreibung nur auf das Wesentlichste beschränkt. Hinsichtlich einer ausführlichen Erläuterung dieses Schaltungsaufbaues kann beispielsweise auf die DE-OS 2 809 402, DE-OS 2 950 607 und DE-OS 3 007 874 verwiesen werden.

Die von den Magnetköpfen K1 und K2 wiedergegebenen Signale werden dem Eingang 16 des Schaltungsteiles 15 der Stellsignalerzeugungsschaltung 14 zugeführt. An den Eingang 16 ist ein Bandpaßfilter 17 angeschlossen, das aus dem von den Magnetköpfen wiedergegebenen Signalgemisch die Spurfolgesignale ausfiltert. An dieser Stelle ist zu erwähnen, daß beim Abtasten einer Spur durch einen Magnetkopf neben dem betreffenden Audiosignal und Videosignal nicht nur das in dieser Spur aufgezeichnete Spurfolgesignal, sondern auch die von den beiden benachbarten Spuren übergesprochenen Spurfolgesignale, die ein Maß für Spurabweichungen des Magnetkopfes von den von demselben abzutastenden Spur bilden, abgetastet und wiedergegeben werden. Die wiedergegebenen und vom Bandpaßfilter 17 ausgefilterten Spurfolgesignale werden einer Mischschaltung 18 zugeführt, der außerdem von einem steuerbaren Mischsignalgenerator 19 Mischsignale mit wechselnder Frequenz zugeführt werden. Der steuerbare Mischsignalgenerator 19 liefert als Mischsignal stets ein Signal mit einer Frequenz, die mit der Frequenz des Spurfolgesignales übereinstimmt, das in den momentan von den Magnetköpfen abgetasteten Spuren aufgezeichnet ist. Aufgrund des in Fig. 1 angegebenen Musters, mit dem die Spurfolgesignale in den Spuren abwechselnd aufgezeichnet sind, überstreichen die beiden Magnetköpfe in den zweiten Abtastintervallen, in denen beide Magnetköpfe mit dem Magnetband in Abtastverbindung stehen und daher beide Magnetköpfe Signale wiedergeben, Spurabschnitte, in denen das frequenzmäßig gleiche Spurfolgesignal gespeichert ist. An die Mischschaltung 18 sind zwei Bandpaßfilter 20 und 21 angeschlossen, die je auf das Mischfrequenzprodukt zwischen dem Mischsignal und einer der übergesprochenen Spurfolgesignale abgestimmt sind. An jedes Bandpaßfilter 20 bzw. 21 ist ein Amplitudendetektor 22 bzw. 23 zum Feststellen der Amplituden der Mischfrequenzprodukte angeschlossen. In einer an die Amplitudendetektoren 22 und 23 angeschlossenen Vergleichsschaltung 24 werden diese Amplituden verglichen. Das Ausgangssignal der Vergleichsschaltung 24, das ein Maß für die Größe und Richtung der Abweichungen der Abtastbahnen der Magnetköpfe gegenüber den von denselben abzutastenden Spuren darstellt, wird einem Komparator 25 zugeführt, dem an einem weiteren Eingang ein in einer durch einen Mikroprozessor gebildeten Speichereinrichtung 26 in digitaler Form gespeichertes, mit einem Digital/Analog-Wandler 27 in ein analoges Signal umgewandeltes, die Abweichungen der Abtastbahnen der Magnetköpfe gegenüber den abzutastenden Spuren repräsentierendes Spurfehlersignal zugeführt wird. In Abhängigkeit vom Vergleichsergebnis im Komparator 25 wird das in der Speichereinrichtung gespeicherte Spurfehlersignal korrigiert, so daß es ein Maß für die momentanen Spurabweichungen der abtastenden Magnetköpfe darstellt. Auf diese Weise ist in der Speichereinrichtung 26 ein zu den Stellsignalen zum genauen Nachführen der Magnetköpfe entlang der von denselben abzutastenden Spuren korrespondierendes Spurfehlersignal gespeichert, das nach Umwandlung mit dem Digital/Analog-Wandler 27 am Ausgang 28 des Schaltungsteiles 15 zur Bildung der Stellsignale zur Verfügung steht.

Zum alternierenden Zuführen der von den Magnetköpfen K1 und K2 wiedergegebenen Signale zur Stellsignalerzeugungsschaltung 14 bzw. zum Eingang 16 des Schaltungsteiles 15 derselben ist eine erste steuerbare Schalteinrichtung 29 vorgesehen, die aus zwei Schaltern 30 und 31 besteht. Der Schalter 30 ist mit seinem Eingang mit dem Ausgangsanschluß 8 des rotierenden Transformators 6 des Magnetkopfes K1 und der Schalter 31 ist mit seinem Eingang mit dem Ausgangsanschluß 9 des rotierenden Transformators 7 des Magnetkopfes K2 verbunden. Die Ausgänge der Schalter 30 und 31 sind miteinander und mit dem Eingang 16 des Schaltungsteiles 15 verbunden. An den Ausgang 28 des Schaltungsteiles 15 sind zwei mit ihren Eingängen miteinander verbundene Abtast- und Halteschaltungen 32 und 33 angeschlossen, die je einen Signalabtastschalter 34 bzw. 35 und je eine dem Signalabtastschalter nachgeschaltete Speicherschaltung 36 bzw. 37 aufweisen. Die Speicherschaltungen 36 und 37 sind über je eine Schaltungsstufe 38 bzw. 39 zur Signalumsetzung- und -verstärkung mit dem Eingangsanschluß 12 bzw. 13 der Schleifringanordnung 10 bzw. 11 und damit mit den Verstelleinrichtungen A1 und A2 verbunden. Die beiden Signalabtastschalter 34 und 35 bilden miteinander eine zweite steuerbare Schalteinrichtung 40, über die alternierend die vom Schaltungsteil 15 am Ausgang 28 desselben abgegebenen, zu den Stellsignalen für die Verstelleinrichtungen korrespondierenden Signale, die durch die Ausgangssignale des Digital/Analog-Wandlers 27 gebildet sind, den Speicherschaltungen 36 bzw. 37 zuführbar sind, welche diese Signale zur Erzeugung der Stellsignale mit den Schaltungsstufen 38 und 39 gespeichert halten. Durch das Ausnützen der ohnedies in den Abtast- und Halteschaltungen 32 und 33 enthaltenden Signalabtastschalter 34 und 35 zur Bildung der zweiten Schalteinrichtung erübrigt es sich, diese zweite Schalteinrichtung mit separaten Schaltern aufzubauen, wodurch sich zusätzlich zur Ersparnis auch ein besonders einfacher Schaltungsaufbau ergibt.

Zur Steuerung der ersten und zweiten Schalteinrichtung 29 und 40 ist ein Steuersignalgenerator 41 vorgesehen, dem zu seiner Triggerung an einem Eingang 42 desselben des impulsförmigen Positionsgebersignal PG des durch den Magneten M und den feststehenden Magnetkopf K3 gebildeten Positionsgebers, das über eine Signalformungs- und Verstärkerschaltung 43 geführt ist, zugeleitet ist. Der Steuersignalgenerator 41 weist Steuerausgänge 44, 45, 46, 47, 48, 49, 50 und 51 auf, an denen derselbe impulsförmige Steuersignale abgibt, wie dies noch nachstehend erläutert ist. Ein solcher Steuersignalgenerator kann beispielsweise sehr einfach durch einen Mikroprozessor gebildet sein, wobei dann zweckmäßigerweise die Speichereinrichtung 26 der Stellsignalerzeugungsschaltung 14 und der Steuersignalgenerator 41 mit einem einzigen Mikroprozessor realisiert sind. In vorliegendem Zusammenhang hat sich in der Praxis der Mikroprozessor 8051 der Firma Intel als zweckmäßig erwiesen. Die Erzeugung von impulsförmigen Steuersignalen mit Hilfe eines solchen Mikroprozessors erfolgt durch zeitgesteuertes potentialmäßiges Hochsetzen bzw. Tiefsetzen von Ausgängen desselben, wie dies allgemein bekannt ist. Aus diesem Grund wird der Einfachheit halber auch davon Abstand genommen, ein separates Flußdiagramm zur Erzeugung eines impulsförmigen Steuersignales mit Hilfe eines Mikroprozessors anzugeben.

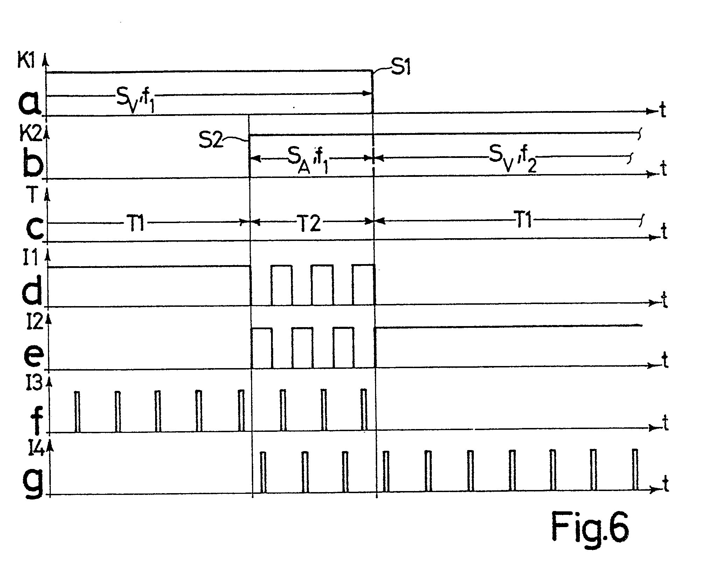

Im folgenden wird die Steuerung der ersten und zweiten Schalteinrichtung 29 und 40 vom Steuersignalgenerator 41 beschrieben, wobei auf die Diagramme gemäß Fig. 6 Bezug genommen wird. In den Fig. 6a und 6b sind analog wie in den Fig. 3b und 3c, jedoch nur ausschnittsweise in vergrößertem Zeitmaßstab die Zeitintervalle dargestellt, in denen die Magnetköpfe K1 bzw. K2 die in den Spuren S1 bzw. S2 gespeicherten Signale wiedergeben. In Fig. 6c sind analog wie in Fig. 3d die ersten und zweiten Abtastintervalle T1 und T2 dargestellt, wobei zuerst der Endabschnitt des ersten Abtastintervalles T1, in dem nur der Magnetkopf K1 mit dem Magnetband in Abtastverbindung steht und aus der Spur S1 das Videosignal $S_V$ und das Spurfolgesignal mit der Frequenz $f_1$ wiedergibt, danach das zweite Abtastintervall T2, in dem beide Magnetköpfe K1 und K2 mit dem Magnetband in Abtastverbindung stehen und der Magnetkopf K1 aus der Spur S1 das Videosignal $S_V$ und das Spurfolgesignal mit der Frequenz $f_1$ und zugleich der Magnetkopf K2 aus der Spur S2 das Audiosignal $S_A$ und ebenfalls das Spurfolgesignal mit der Frequenz $f_1$ wiedergibt, und wonach das nächste erste Abtastintervall T1, in dem nur der Magnetkopf K2 mit dem Magnetband in Abtastverbindung steht und aus der Spur S2 das Videosignal $S_V$ und das Spurfolgesignal mit der Frequenz $f_2$ wiedergibt, zeitlich aufeinanderfolgen. Im zweiten Abtastintervall T2 geben die Magnetköpfe K1 und K2 aus beiden abgetasteten Spuren S1 und S2 dasselbe Spurfolgesignal wieder, wobei auch von beiden Magnetköpfen dieselben übergesprochenen Spurfolgesignale wiedergegeben werden, wie dies leicht anhand des Spurbildes gemäß Fig. 1 feststellbar ist.

In Fig. 6d ist das vom Steuersignalgenerator 41 an dessen Steuerausgang 44 abgegebene impulsförmige Steuersignal I1 dargestellt, das dem Schalter 30 der ersten Schalteinrichtung 29 zu dessen Steuerung zugeführt wird. In Fig. 6e ist das vom Steuersignalgenerator 41 an dessen Steuerausgang 45 abgegebene impulsförmige Steuersignal I2 dargestellt, das dem Schalter 31 der ersten Schalteinrichtung 29 zu dessen Steuerung zugeführt wird. Die Fig. 6f zeigt das vom Steuersignalgenerator 41 an dessen Steuerausgang 46 abgegebene impulsförmige Steuersignal I3, das aus zeitlich kurzen, in einem vorgegebenen Takt auftretenden Abtastimpulsen besteht und das dem Signalabtastschalter 34 der zweiten Schalteinrichtung 40 zugeführt wird. Die Fig. 6g zeigt das vom Steuersignalgenerator 41 an dessen Steuerausgang 47 abgegebene impulsförmige Steuersignal I4, das ebenfalls aus zeitlich kurzen, in einem vorgegebenen Takt auftretenden Abtastimpulsen besteht und das dem Signalabtastschalter 35 der zweiten Schalteinrichtung 40 zugeführt wird. Die Steuerung der Schalter 30, 31, 34 und 35 erfolgt hierbei so, daß dieselben durch einen an sie angelegten Steuerimpuls in den leitenden Zustand gebracht, also geschlossen werden. Selbstverständlich sind diese Schalter einfach durch elektronische Schalter, beispielsweise durch Transistor-Schaltstufen, gebildet. Mit den impulsförmigen Steuersignalen I1, I2, I3 und I4 steuert der Steuersignalgenerator 41 in den ersten Abtastintervallen T1 die erste Schalteinrichtung 29 zum Weiterleiten der von dem jeweils in Abtastverbindung mit dem Magnetband stehenden Magnetkopf K1 bzw. K2 wiedergegebenen Signale zur Stellsignalerzeugungsschaltung 14 und die zweite Schalteinrichtung 40 zum Weiterleiten der zu den Stellsignalen für die den jeweils in Abtastverbindung stehenden Magnetkopf K1 bzw. K2 tragende Verstelleinrichtung A1 bzw. A2 korrespondierenden, vom Schaltungsteil 15 abgegebenen Signale zu der der Verstelleinrichtung A1 bzw. A2 vorgeschalteten Speicherschaltung 36 bzw. 37 der Abtast- und Halteschaltung 32 bzw. 33 an.

Das Steuersignal I1 bewirkt im ersten Abtastintervall T1, in dem nur der Magnetkopf K1 in Abtastverbindung mit dem Magnetband steht, ein ständiges Schließen des Schalters 30 der ersten Schalteinrichtung 29, wodurch das von dem Magnetkopf K1 wiedergegebene Signal ununterbrochen an die Stellsignalerzeugungsschaltung 14 weitergeleitet wird, und konform hierzu bewirkt das Steuersignal I3 im betreffenden ersten Abtastintervall T1 ein im Takt der Abtastimpulse des Steuersignales I3 erfolgendes Schließen des Signalabtastschalters 34 der zweiten Schalteinrichtung 40, wodurch das aus den der Stellsignalerzeugungsschaltung 14 über den Schalter 30 der ersten Schalteinrichtung 29 zugeführten, vom Magnetkopf K1 wiedergegebenen Signalen im Schaltungsteil 15 gewonnene, zu dem Stellsignal für die den Magnetkopf K1 tragende Verstelleinrichtung A1 korrespondierende Signal in dem durch das Steuersignal I3 festgelegten Takt hinsichtlich seiner Amplitude abgetastet wird, wobei jeder der abgetasteten Signalwerte in der Speicherschaltung 36 bis zum Eintreffen des nächsten Signalwertes gespeichert wird. Aus den in der Speicherschaltung 36 im Takt der Abtastimpulse aufeinanderfolgend gespeicherten Signalwerten wird durch weitere Verarbeitung und Verstärkung in der Schaltungsstufe 38 zur Signalumsetzung und -verstärkung das Stellsignal für die Verstelleinrichtung A1 des in Abtastverbindung mit dem Magnetband stehenden Magnetkopfes K1 gebildet, so daß dieser im betreffenden ersten Abtastintervall genau entlang der von demselben abzutastenden Spur nachgeführt wird. Das Steuersignal I2 bewirkt im nachfolgenden ersten Abtastintervall T1, in dem nur der Magnetkopf K2 mit dem Magnetband in Abtastverbindung steht, ein ständiges Schließen des Schalters 31 der ersten Schalteinrichtung 29, wodurch das vom Magnetkopf K2 wiedergegebene Signal ununterbrochen an die Stellsignalerzeugungsschaltung 14 weitergeleitet wird, und konform hierzu bewirkt das Steuersignal I4 im betreffenden ersten Abtastintervall T1 ein im Takt der Abtastimpulse des Steuersignales I4 erfolgendes Schließen des Signalabtastschalters 35 der zweiten Schalteinrichtung 40, wodurch das aus den der Stellsignalerzeugungsschaltung 14 über den Schalter 31 der ersten Schalteinrichtung 29 zugeführten, vom Magnetkopf K2 wiedergegebenen Signalen im Schaltungsteil 15 gewonnene, zu dem Stellsignal für die den Magnetkopf K2 tragende Verstelleinrichtung A2 korrespondierende Signal in dem durch das Steuersignal I4 festgelegten Takt hinsichtlich seiner Amplitude abgetastet wird, wobei jeder der abgetasteten Signalwerte in der Speicherschaltung 37 bis zum Eintreffen des nächsten Signalwertes gespeichert wird. Aus den in der Speicherschaltung 37 im Takt der Abtastimpulse aufeinanderfolgend gespeicherten Signalwerten wird durch weitere Verarbeitung und Verstärkung in der Schaltungsstufe 39 zur Signalumsetzung und -verstärkung das Stellsignal für die Verstelleinrichtung A2 des in Abtastverbindung mit dem Magnetband stehenden Magnetkopfes K2 gebildet, so daß auch dieser im betreffenden ersten Abtastintervall genau entlang der von demselben abzutastenden Spur nachgeführt wird. Auf diese Weise ist erreicht, daß die Magnetköpfe in den ersten Abtastintervallen stets genau entlang der von denselben abzutastenden Spuren nachgeführt werden, wodurch stets eine einwandfreie Wiedergabe der gespeicherten Signale gewährleistet ist.

Wie aus den Fig. 6d, 6e, 6f und 6g ersichtlich ist, weisen die vom Steuersignalgenerator 41 abgegebenen impulsförmigen Steuersignale I1, I2, I3 und I4 in den zweiten Abtastintervallen T2 je drei Impulse auf. Dabei sind die drei Impulse der Steuersignale I1 und I2 bzw. der Steuersignale I3 und I4 in ihrer gegenseitigen Phasenlage so zueinander verschoben, daß der Steuersignalgenerator 41 in den zweiten Abtastintervallen, in denen beide Magnetköpfe K1 und K2 mit dem Magnetband in Abtastverbindung stehen, die erste und die zweite Schalteinrichtung 29 und 40 zum dreimaligen abwechselnden zeitmultiplexen Weiterleiten der von den beiden zugleich in Abtastverbindung mit dem Magnetband stehenden Magnetköpfen K1 und K2 wiedergegebenen Signale zur Stellsignalerzeugungsschaltung I4 und der zu den Stellsignalen für die die beiden zugleich in Abtastverbindung stehenden Magnetköpfe K1 und K2 tragenden Verstelleinrichtungen A1 und A2 korrespondierenden Signale zu den diesen Verstelleinrichtungen A1 und A2 vorgeschalteten Speicherschaltungen 36 und 37 ansteuert.

Am Beginn des zweiten Abtastintervalles T2 bewirkt der erste in diesem Abtastintervall liegende Impuls des Steuersignales I2 ein Schließen des Schalters 31 der ersten Schalteinrichtung 29 und konform hierzu der erste im zweiten Abtastintervall liegende Abtastimpuls des Steuersignals I4 ein kurzzeitiges Schließen des Signalabtastschalters 35 der zweiten Schalteinrichtung 40, wodurch am Beginn des zweiten Abtastintervalles T2 für die Dauer des ersten Impulses des Schaltsignales I2 die vom Magnetkopf K2 wiedergegebenen Signale der Stellsignalerzeugungsschaltung 14 zugeführt werden und von dem daraus im Schaltungsteil 15 gewonnenen, zu dem Stellsignal für die den Magnetkopf K2 tragende Verstelleinrichtung A2 korrespondierenden Signal ein Signalwert abgetastet und in der Speicherschaltung 37 gespeichert wird. Aus dem in der Speicherschaltung 37 gespeicherten Signalwert wird dann in der Schaltungsstufe 39 ein Stellsignalwert für die Verstelleinrichtung A2 gewonnen und derselben zugeführt. Nach Erhalt dieses Stellsignalwertes für die Verstelleinrichtung A2 steuert der Steuersignalgenerator 41 mit dem ersten im zweiten Abtastintervall liegenden Impuls des Steuersignals I1 und dem ersten im zweiten Abtastintervall liegenden Abtastimpuls des Steuersignales I3 den Schalter 30 der ersten Schalteinrichtung 29 und den Signalabtastschalter 34 der zweiten Schalteinrichtung 40 in den leitenden Zustand, wobei dann auf analoge Weise ein Signalwert in der Speicherschaltung 36 gespeichert und in der Schaltungsstufe 38 ein Stellsignalwert für die Verstelleinrichtung A1 gewonnen und derselben zugeführt wird. Nach Erhalt dieses Stellsignalwertes für die Verstelleinrichtung A1 erfolgt ein neuerliches konformes Umschalten der ersten und zweiten Schalteinrichtung, das jeweils durch die zweiten in den zweiten Abtastintervallen liegenden Impulse der Schaltsignale I2 und I4 bewirkt wird, wodurch wieder ein Stellsignalwert für die Verstelleinrichtung A2 gewonnen wird. Dieses abwechselnde Umschalten der ersten und zweiten Schalteinrichtung zum zeitmultiplexen Weiterleiten der von den Magnetköpfen wiedergegebenen Signale zur Stellsignalerzeugungsschaltung und der daraus gewonnenen, zu den Stellsignalen korrespondierenden Signalwerte zu den Speicherschaltungen wiederholt sich insgesamt drei Mal, wobei entsprechend jedem Umschaltvorgang ein Stellsignalwert für die betreffende Verstelleinrichtung erzeugt wird. Es werden also im zweiten Abtastintervall T2 für jede Verstelleinrichtung A1 bzw. A2 drei Stellsignalwerte erzeugt. Selbstverständlich wäre es auch denkbar, für jede Verstelleinrichtung mehr als drei Stellsignalwerte im zweiten Abtastintervall zu erzeugen. An dieser Stelle sei noch erwähnt, daß in den zweiten Abtastintervallen, die jenen ersten Abtastintervallen zeitlich nachfolgen, in denen nur der zweite Magnetkopf mit dem Magnetband in Abtastverbindung steht, am Beginn dieser zweiten Abtastintervalle zuerst ein Stellsignalwert für die den ersten Magnetkopf tragende Verstelleinrichtung A1 durch entsprechendes Ansteuern der ersten und zweiten Schalteinrichtung erzeugt wird und nachfolgend in analoger Weise wie vorstehend beschrieben durch das alternierende konforme Umschalten der beiden Schalteinrichtungen abwechselnd Stellsignalwerte für beide Verstelleinrichtungen in zeitmultiplexer Form erzeugt werden. Erwähnt sei noch, daß in den zweiten Abtastintervallen die Vorderflanken der Abtastimpulse der Steuersignale I3 und I4 zum Ansteuern der Signalabtastschalter 34 und 35 der zweiten Schalteinrichtung gegenüber den Vorderflanken der hierzu konformen Impulse der Steuersignale I1 und I2 zum Ansteuern der Schalter 30 und 31 der ersten Schalteinrichtung 29 verzögert auftreten, um die im Schaltungsteil 15 verursachten Signallaufzeiten auszugleichen.

Durch die zeitlich abwechselnde Erzeugung der Stellsignalwerte für die beiden Verstelleinrichtungen in den zweiten Abtastintervallen ist erreicht, daß in der Stellsignalerzeugungsschaltung vorteilhafterweise mit nur einem einzigen Schaltungsteil 15 zum Erzeugen der zu den Stellsignalen korrespondierenden Signale aus den von den Magnetköpfen wiedergegebenen Signalen das Auslangen gefunden wird und daß dabei auch in den zweiten Abtastintervallen beide Magnetköpfe stets genau entlang der von denselben abzutastenden Spuren nachgeführt werden, so daß auch hierbei stets für eine einwandfreie Wiedergabe der gespeicherten Signale gewährleistet ist.

Wie bereits erwähnt, sind die Audiosignale $S_A$ in einem ersten Spurabschnitt jeder Spur in zeitkomprimierter, pulscodemodulierter Form gespeichert und die Videosignale $S_V$ in einem an den ersten Spurabschnitt anschließenden zweiten Spurabschnitt jeder Spur in frequenzmodulierter bzw. frequenztransponierter Form gespeichert. Das in Fig. 4 dargestellte System zum Wiedergeben der in den Spuren gespeicherten Signale weist zum Umwandeln der von den Magnetköpfen K1 und K2 wiedergegebenen, zeitkomprimierten und pulscodemodulierten Audiosignale $S_A$ in Audiosignale $S'_A$, die sich zur Wiedergabe mit einem Lautsprecher eignen, eine Audiosignal-Verarbeitungsschaltung 52 auf, deren Eingang 53 die wiedergegebenen Audiosignale $S_A$ über eine ebenfalls von dem Steuersignalgenerator 41 steuerbare dritte Schalteinrichtung 54 zuführbar sind und die an ihrem Ausgang die umgewandelten Audiosignale $S'_A$ abgibt. Die dritte Schalteinrichtung 54 weist zwei Schalter 56 und 57 auf. Der Eingang des Schalters 56 ist mit dem Ausgangsanschluß 8 des rotierenden Transformators 6 des Magnetkopfes K1 und der Eingang des Schalters 57 ist mit dem Ausgangsanschluß 9 des rotierenden Transformators 7 des Magnetkopfes K2 verbunden. Die Ausgänge der beiden Schalter 56 und 57 sind miteinander und mit dem Eingang 53 der Audiosignal-Verarbeitungsschaltung 52 verbunden. Der Schalter 56 ist von einem vom Steuersignalgenerator 41 an dessen Steuerausgang 48 angegebenen impulsförmigen Steuersignal I5 steuerbar, wobei

das Steuersignal I5 bewirkt, daß der Schalter 56 immer dann leitend ist, wenn der Magnetkopf K1 aus den betreffenden Spurabschnitten der Spuren ein Audiosignal $S_A$ wiedergibt. Der Schalter 57 ist von einem vom Steuersignalgenerator 41 an dessen Steuerausgang 49 abgegebenen Steuersignal I6 steuerbar, wobei das Steuersignal I6 bewirkt, das der Schalter 57 immer dann leitend ist, wenn der Magnetkopf K2 aus den betreffenden Spurabschnitten der Spuren ein Audiosignal $S_A$ wiedergibt. Die Audiosignal-Verarbeitungsschaltung filtert aus dem ihr über die dritte Schalteinrichtung zugeführten Signalgemisch aus Audiosignalen $S_A$ und Spurfolgesignalen mit den Frequenzen f1, f2, f3 bzw. f4 die wiedergegebenen Audiosignale $S_A$ aus und wandelt diese durch entsprechende Decodierung und Zeitdehnung in mit einem Lautsprecher wiedergebbare Audiosignale $S'_A$ um.

Zum Umwandeln der von den Magnetköpfen K1 und K2 wiedergegebenen frequenzmodulierten bzw. frequenzumgesetzten Videosignale $S_V$ in Videosignale $S'_V$ die mit einem Fernsehempfänger wiedergegeben werden können, weist das in Fig. 4 dargestellte System eine Videosignal-Verarbeitungsschaltung 58 auf, deren Eingang 59 die von den Magnetköpfen K1 und K2 wiedergegebenen Signale über eine ebenfalls von dem Steuersignalgenerator 41 steuerbare vierte Schalteinrichtung 60 zuführbar sind und die an ihrem Ausgang 61 die umgewandelten Videosignale $S'_V$ abgibt. Die vierte Schalteinrichtung 60 weist zwei Schalter 62 und 63 auf. Der Eingang des Schalters 62 ist mit dem Ausgangsanschluß 8 des rotierenden Transformators 6 des Magnetkopfes K1 und der Eingang des Schalters 63 ist mit dem Ausgangsanschluß 9 des rotierenden Transformators 7 des Magnetkopfes K2 verbunden. Die Ausgänge der Schalter 62 und 63 sind mit dem Eingang 59 der Videosignal-Verarbeitungsschaltung 58 verbunden. Der Schalter 62 ist von einem vom Steuersignalgenerator 41 an dessen Steuerausgang 50 abgegebenen impulsförmigen Steuersignal I7 steuerbar, wobei das Steuersignal I7 bewirkt, daß der Schalter 62 immer dann leitend ist, wenn der Magnetkopf K1 aus den betreffenden Spurabschnitten der Spuren ein Videosignal $S_V$ wiedergibt. Der Schalter 63 ist von einem vom Steuersignalgenerator 41 an dessen Steuerausgang 51 abgegebenen impulsförmigen Steuersignal I8 steuerbar, wobei das Steuersignal I8 bewirkt, daß der Schalter 63 immer dann leitend ist, wenn der Magnetkopf K2 aus den betreffenden Spurabschnitten der Spuren ein Videosignal $S_V$ wiedergibt. Die Videosignal-Verarbeitungsschaltung filtert aus dem ihr über die vierte Schalteinrichtung zugeführten wiedergegebenen Signalgemisch aus Videosignalen $S_V$ und Spurfolgesignalen mit den Frequenzen f1, f2, f3 bzw. f4 die wiedergegebenen Videosignale $S_V$ heraus und wandelt diese durch entsprechende Frequenzdemodulation bzw. Frequenzrückumsetzung in mit einem Fernsehempfänger wiedergebbare Videosignale $S'_V$ um.

Aufgrund der Tatsache, daß die Magnetköpfe sowohl in den ersten als auch in den zweiten Abtastintervallen stets genau entlang der von denselben abzutastenden Spuren nachgeführt werden, was in den zweiten Abtastintervallen durch die erfindungsgemäße zeitmultiplexe Erzeugung der Stellsignale auf überraschend einfache Weise realisiert ist, wird stets eine einwandfreie und störungsfreie Wiedergabe der in den Spuren gespeicherten Audiosignale und Videosignale erreicht.

Selbstverständlich sind im Rahmen der Erfindung noch eine Reihe von Abwandlungen möglich. So kann die trommelförmige Abtasteinrichtung auch mehr als zwei Magnetköpfe aufweisen, beispielsweise vier in äquidistanten Winkelabständen liegende Magnetköpfe, von welchen dann in den zweiten Abtastintervallen zwei benachbarte Magnetköpfe zugleich mit dem Magnetband in Abtastverbindung stehen und für die diese beiden Magnetköpfe tragenden Verstelleinrichtungen in den zweiten Abtastintervallen die Stellsignale in zweimultiplexer Form gebildet werden. Die Stellsignalerzeugungsschaltung bzw. der Schaltungsteil derselben zur Erzeugung der zu den Stellsignalen korrespondierenden Signale aus den von den Magnetköpfen wiedergegebenen Signalen kann auch den in der DE-OS 3 217 031 geoffenbarten oder auch einen anderen Aufbau aufweisen.

## Patentansprüche

1. System zum Wiedergeben von auf einem Magnetband (1) in schräg zu dessen Längsrichtung verlaufenden, parallel nebeneinander liegenden Spuren (51, 52, usw.) gespeicherten Signalen mit einer trommelförmigen Abtasteinrichtung (2), um deren Mantelfläche das Magnetband in einem vorgegebenen Winkelbereich in einer schraublinienenförmigen Bahn herumgeschlungen ist und die zum aufeinanderfolgenden Abtasten der Spuren und Wiedergeben der darin gespeicherten Signale mindestens zwei rotierend antreibbare Magnetköpfe (K1, K2) aufweist, von denen in zyklisch aufeinanderfolgenden ersten Abtastintervallen (T1) jeweils nur ein Magnetkopf mit dem Magnetband in Abtastverbindung steht und in zyklisch aufeinanderfolgenden, zwischen den ersten Abtastintervallen liegenden zweiten Abtastintervallen (T2) jeweils zwei Magnetköpfe zugleich mit dem Magnetband in Abtastverbindung stehen und die von elektromechanischen Verstelleinrichtungen (A1, A2) getragen sind, mit denen die Magnetköpfe zum Nachführen derselben entlang der abzutastenden Spuren quer zu denselben in Abhängigkeit von den Verstelleinrichtungen zugeführten Stellsignalen verstellbar sind, zu deren Erzeugung eine Stellsignalerzeugungsschaltung (14) vorgesehen ist, der über eine von einem Steuersignalgenerator (41) steuerbare erste Schalteinrichtung (29) alternierend die von den Magnetköpfen wiedergegebenen, ein Maß für Spurabweichungen der Magnetköpfe von den Spuren enthaltenden Signale zur Erzeugung von zu den Stellsignalen für die Verstelleinrichtungen korrespondierenden Signalen zuführbar sind und die den Verstelleinrichtungen vorgeschaltete Speicherschaltungen (36, 37) aufweist, denen über eine von dem Steuersignalgenerator konform zur ersten Schalteinrichtung steuerbare zweite Schalteinrichtung (40) alternierend die zu den Stellsignalen korrespondierenden Signale zuführbar sind und die diese Signale zur Erzeugung der Stellsignale gespeichert halten, wobei der Steuersignalgenerator (41) in den ersten Abtastintervallen (T1) die erste Schalteinrichtung (2) zum Weiterleiten der von dem jeweils in Abtastverbindung stehenden Magnetkopf wiedergegebenen Signale zur Stellsignalerzeugungsschaltung (14) und die zweite Schalteinrichtung (40) zum Weiterleiten der zu den Stellsignalen für die den jeweils in Abtastverbindung stehenden Magnetkopf tragende Verstelleinrichtung korrespondierenden Signale zu der dieser Verstelleinrichtung vorgeschalteten Speicherschaltung ansteuert, dadurch gekennzeichnet, daß der Steuersignalgenerator (41) in den zweiten Abtastintervallen (T2) die erste und die zweite Schalteinrichtung (40) zum mindestens einmalig abwechselnden zeitmultiplexen Weiterleiten der von den beiden zugleich in Abtastverbindung stehenden Magnetköpfen (K1, K2) wiedergegebenen Signale zur Stellsignalerzeugungsschaltung (14) und der zu den Stellsignalen für die die beiden zugleich in Abtastverbindung stehenden Magnetköpfe (K1, K2) tragenden Verstelleinrichtungen (A1, A2) korrespondierenden Signale zu den diesen Verstelleinrichtungen vorgeschalteten Speicherschaltungen (36, 37) ansteuert.

2. System nach Anspruch 1, dadurch gekennzeichnet, daß die von dem Steuersignalgenerator (41) angesteuerte zweite Schalteinrichtung (40) durch Signalabtastschalter (34, 35) von Abtast- und Halteschaltungen (32, 33), welche die den Verstelleinrichtungen (A1, A2) vorgeschalteten Speicherschaltungen enthalten, gebildet ist.

## Claims

1. A system for the reproduction of signals stored on a magnetic tape (1) in parallel adjacent tracks (S1, S2) situated between the first scanning intervals, which are inclined relative to the longitudinal axis of said tape, comprising a drum-shaped scanning device (2) arround whose circumferential surface the magnetic tape is wrapped along a helical path over a predetermined angle and which, for successively scanning the tracks and reproducing the signals stored in said tracks, comprises at least two rotatable magnetic heads (K1, K2) of which only one head at a time is in scanning contact with the magnetic tape in cyclically succeeding first scanning intervals (T1) and of which two magnetic heads at a time are in scanning contact with the magnetic tape in second scanning intervals (T2) situated between the first scanning intervals, which heads are mounted on electromechanical actuating devices (A1, A2) by means of which, for keeping the magnetic heads on the tracks to be scanned, said heads can be positioned transversely in relation to said tracks depending on actuation signals applied to the actuating device, for the generation of which actuation signals an actuation-signal generation circuit (14) is provided, to which circuit, via a first switching device (29) controlled by a control-signal generator (41), the signals reproduced by the magnetic heads and containing a measure of the tracking errors of the magnetic heads are applied alternately for the purpose of generating signals corresponding to the actuation signals for the actuating devices and which circuit comprises storage circuits (36, 37) arranged before the actuating devices, to which storage circuits, via a second switching device (40) which can be controlled by the control-signal generator in a similar manner to the first switching device, the signals corresponding to the actuation signals can be applied alternately to store said corresponding signals for the generation of the actuation signals, the control-signal generator (41) controlling the first switching device (29) in the first scanning intervals so as to transfer the signals reproducing by the magnetic head which is instantaneously in scanning contact to the actuation signal generating circuit (14) and controlling the second switching device (40) so as to transfer the signals corresponding to the actuation signals for the actuating device carrying the magnetic head which is instantaneously in scanning contact to the storage circuit arranged before said actuating device, characterized in that in the second scanning intervals (T2) the control-signal generator (41) controls the first and the second switching device (40) so as to achieve the alternating time-division multiplex transfer, said transfer alternating at least one time, of the signals reproduced by the two magnetic heads (K1, K2) which are simultaneously in scanning contact to the actuating-signal generating circuit (14) and of the signals corresponding to the actuation signals for the actuating devices carrying the two magnetic heads which are simultaneously in scanning contact to the storage circuits arranged before said actuating devices.

2. A system as claimed in Claim 1, characterized in that the second switching device (40) controlled by the control-signal generator (41) is formed by signal-sampling switches (34, 35) of sample-and-hold circuits (32, 33) comprising the storage circuits arranged before the actuating devices (A1, A2).

## Revendications

1. Système pour reproduire des signaux enregistrés sur une bande magnétique (1), sur des pistes (S1, S2 etc.) disposées parallèlement les unes à côté des autres et s'étendant obliquement par rapport à la direction longitudinale de la bande, comportant un dispositif d'analyse en forme de tambour (2), autour de la surface périphérique duquel la bande magnétique est bouclée dans un domaine angulaire prédéfini, suivant un trajet hélicoïdal, et qui, pour analyser les pistes consécutivement et reproduire les signaux qui y sont enregistrés, comporte au moins deux têtes magnétiques (K1, K2) pouvant être entraînées en rotation, parmi lesquelles, dans des premiers intervalles d'échantillonage (T1) qui se suivent de manière cyclique, chaque fois une seule tête magnétique est en liaison d'analyse avec la bande magnétique et, dans des seconds intervalles d'échantillonnage (T2) qui se suivent de manière cyclique et qui sont situés entre les premiers, chaque fois deux têtes magnétiques sont simultanément en liaison d'analyse avec la bande magnétique, ces têtes magnétiques étant supportées par des dispositifs de déplacement électromécaniques (A1, A2) au moyen desquels les têtes magnétiques, afin de suivre les pistes à analyser, peuvent être déplacées perpendiculairement à celles-ci en fonction des signaux de positionnement appliqués par les dispositifs de déplacement, la production de ces signaux étant assurée par un circuit générateur de signaux de positionnement (14) auquel, par l'intermédiaire d'un premier dispositif de commutation (29) pouvant être commandé par un générateur de signaux de commande (41), peuvent être appliqués en alternance les signaux reproduits par les têtes magnétiques, contenant une mesure des déviations des têtes magnétiques par rapport aux pistes afin de produire des signaux correspondant aux signaux de positionnement pour les dispositifs de déplacement, et qui comporte les circuits de stockage (36, 37) précédant les dipositifs de déplacement, auxquels, par l'intermédiaire d'un second dispositif de commutation (40) pouvant être commandé par le générateur de signaux de commande conformément au premier dispositif de commutation, les signaux correspondant aux signaux de positionnement peuvent être appliqués en alternance et qui retiennent ces signaux stockes pour produire les signaux de positionnement, le générateur de signaux de commande (41) activant, dans les premiers intervalles d'échantillonnage (T1), le premier dispositif de commutation (29) pour la transmission des signaux reproduits par la tête magnétique se trouvant précisément en liaison d'analyse, au circuit générateur de signaux de positionnement (14), et le second dispositif de commutation (40), pour la transmission des signaux correspondant aux signaux de positionnement pour le dispositif de déplacement portant la tête magnétique se trouvant précisément en liaison d'analyse, au circuit de stockage précédent ce dispositif de déplacement, caractérisé en ce que le générateur de signaux de commande (41) active, dans les seconds intervalles d'échantillonnage (T2), le premier et le second dispositif de commutation (40) pour la transmission multiplex dans le temps avec alternance au moins unique des signaux reproduits par les deux têtes magnétiques (K1, K2) se trouvant simultanément en liaison d'analyse, au circuit générateur de signaux de positionnement (14) et des signaux correspondant aux signaux de positionnement pour les dipositifs de déplacement (A1, A2) portant les deux têtes magnétiques (K1, K2) se trouvant simultanément en liaison d'analyse, aux circuits de stockage (36, 37) précédant ces dispositifs de déplacement.

2. Système suivant la revendication 1, caractérisé en ce que le second dispositif de commutation (40) activé par le générateur de signaux de commande (41) est formé par des interrupteurs d'échantillonnage de signaux (34, 35) de circuits échantillonneurs-bloqueurs (32, 33), qui contiennent les circuits de stockage précédant les dispositifs de déplacement (A1, A2).

Fig.1

Fig.2

Fig.3

Fig.4

Fig.5

Fig.6